# EUROPEAN PATENT SPECIFICATION

(11) **EP 4 198 331 B1**
(45) Date of publication and mention of the grant of the patent: **05.06.2024**
(21) Application number: 22191699.2
(22) Date of filing: 13.09.2022
(51) Int. Cl.: F16D 3/74

(54) **COUPLING AND MECHANICAL SYSTEM**
KUPPLUNG UND MECHANISCHES SYSTEM
COUPLAGE ET SYSTÈME MÉCANIQUE

(30) Priority: 15.12.2021 CN 202111532678
(43) Date of publication of application: 21.06.2023
(73) Proprietor: Jiangsu XCMG Construction Machinery Research Institute Ltd., Xuzhou, Jiangsu 221004 (CN)
(72) Inventor: ZHANG, Zhanwen, Xuzhou, 221004 (CN); GENG, Yanbo, Xuzhou, 221004 (CN); ZHOU, Penghui, Xuzhou, 221004 (CN)
(74) Representative: Hauck Patentanwaltspartnerschaft mbB

(56) References cited:
- CN-A- 105 402 158
- CN-A- 114 183 476
- CN-B- 106 151 303
- CN-U- 205 225 831
- GB-A- 813 337
- JP-A- 2001 349 336
- US-A- 4 193 740
- US-A- 4 781 659
- US-A- 5 085 289

## Description

### CROSS-REFERENCE TO RELATED APPLICATION

### FIELD OF THE INVENTION

The present invention relates to the technical field of engineering machinery, and in particular, to a coupling and a mechanical system. Document CN 114 183 476 can be regarded as prior art.

### BACKGROUND OF THE INVENTION

In some mechanical systems, for example, in engineering machines such as a excavator loaders or skid steer loaders, a coupling is used to connect an engine and a fan. The coupling not only realizes power transmission between the engine and the fan, but also plays a role in vibration damping and torsion resistance, thereby reducing a torsional vibration transmitted from the engine to the fan and preventing the fan from falling off and damaging a core of a radiator.

Therefore, a performance of the coupling directly affects a performance of the mechanical system. In consequence, it is necessary to improve the performance of the coupling.

Couplings mostly adopts a direction connection, that is, one end of the coupling is connected to an engine crankshaft and the other end is connected to a fan. The coupling includes an elastic member, which plays a role in vibration damping, thereby reducing a risk of part failure caused by excessive torsional vibration of the crankshaft.

However, a vibration damping performance of the coupling still needs to be improved.

### SUMMARY OF THE INVENTION

One technical problem to be solved by the present invention is to improve the performance of the coupling.

To solve the above technical problem, the present invention provides a coupling, including:
a first mounting base, including a first flange and a first shaft which are connected with each other, wherein the first flange is configured to be connected to an engine;
a second mounting base, including a second shaft and a second flange, wherein the second shaft is sleeved outside the first shaft, and the second flange is connected to an end, away from the first flange, of the second shaft and is configured to be connected to a fan;
a vibration damper, connected to the first flange and sleeved outside the second shaft for vibration damping; and
at least one positioning member, the positioning member having elasticity and being arranged between the first shaft and the second mounting base for supporting and positioning.

In some embodiments, the positioning member includes a first positioning part, the first positioning part performing supporting and positioning in a radial direction; and/or, the positioning member includes a second positioning part, the second positioning part performing supporting and positioning in an axial direction.

In some embodiments, the positioning member includes the first positioning part and the second positioning part, the second positioning part being connected to an end of the first positioning part and protruding relative to the first positioning part in the radial direction.

In some embodiments, the coupling includes at least two positioning members, wherein the at least two positioning members are arranged at intervals in an axial direction.

In some embodiments, the at least one positioning member includes:
a first positioning member, located between the second shaft and the first shaft; and/or
a second positioning member, located between the second flange and the first shaft, the second flange being sleeved outside the first shaft.

In some embodiments, the first shaft includes a first shaft section and a second shaft section, the first shaft section is connected to the first flange through the second shaft section, a diameter of the first shaft section is smaller than a diameter of the second shaft section, the first shaft section extending into the second shaft, the first positioning member includes a first positioning part and/or a second positioning part, the first positioning part of the first positioning member is located between an inner wall of the second shaft and a side surface of the first shaft section for supporting and positioning in a radial direction, and the second positioning part of the first positioning member is located between an axial end face, close to the second flange, of the second shaft section and the second shaft for supporting and positioning in an axial direction.

In some embodiments, the axial end face, close to the second flange, of the second shaft section is located in the second shaft.

In some embodiments, the coupling includes a limiting member, wherein the limiting member is arranged on an end, away from the first flange, of the first shaft to limit the first shaft; and the second positioning member includes a first positioning member and/or a second positioning member, the first positioning part of the second positioning member is located between an inner wall of the second flange and a side surface of the first shaft for supporting and positioning in a radial direction, and the second positioning part of the second positioning member is located between an end face, facing the first flange, of the limiting member and the second flange for supporting and positioning in an axial direction.

In some embodiments, the first shaft penetrates through the second flange, the limiting member is located outside the second flange, and the second positioning part of the second positioning member is located between the end face, facing the first flange, of the limiting member and an end face, farthest away from the first flange, of the second flange.

In some embodiments, the positioning member is made of a wear-resistant elastic material.

In some embodiments, the positioning member is made of polyurethane.

In some embodiments, the vibration damper includes a first supporting member, a second supporting member and an elastic member, the first supporting member and the second supporting member are opposite to each other in an axial direction, the elastic member is arranged between the first supporting member and the second supporting member, the first supporting member is connected to the first flange, and the second supporting member is sleeved outside the second shaft.

In some embodiments, the vibration damper and the second shaft are connected through a key.

In some embodiments, the key is a rectangular spline.

In addition, the present invention further provides a mechanical system, including an engine and a fan, and further including the coupling according to the embodiments of the present application, wherein the coupling is connected to the engine and the fan.

In the embodiments of the present invention the positioning member and the vibration damper are combined to play a role in two-level vibration damping, and the positioning member realizes reliable positioning to reduce the deflection and/or axial movement of the fan; therefore, the coupling has higher vibration damping performance, structural stability and reliability, thereby the performance of the coupling is effectively improved.

Other features and advantages will become apparent by the detailed description for exemplary embodiments with reference to the following accompany drawings.

### BRIEF DESCRIPTION OF THE DRAWINGS

To describe the technical solutions in the embodiments or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of a mechanical system according to an embodiment of the present invention.
FIG. 2 is a sectional view of a coupling according to an embodiment of the present invention.
FIG. 3 is a left view of a coupling according to an embodiment of the present invention.
FIG. 4 is a right view of a coupling according to an embodiment of the present invention.
FIG. 5 is a perspective view of a first mounting base according to an embodiment of the present invention.
FIG. 6 is a perspective view of a second mounting base according to an embodiment of the present invention.
FIG. 7 is a perspective view of a vibration damper according to an embodiment of the present invention.
FIG. 8 is a perspective view of a positioning member according to an embodiment of the present invention.

### DETAILED DESCRIPTION OF THE EMBODIMENTS

The technical solutions in the embodiments of the present invention will be clearly and completely described below in conjunction with the accompanying drawings.

Technologies, methods and equipment known to those of ordinary skill in the related field may not be discussed in detail, but, where appropriate, the technologies, methods and equipment should be regarded as a part of the specification.

It should be understood that an azimuth or position relationship indicated by azimuth words "front, rear, upper, lower, left, right", "transverse, longitudinal, vertical, horizontal, "top, bottom" and the like is generally an azimuth or position relationship based on the accompanying draws, which is only for facilitating description. In the absence of a statement to the contrary, these azimuth words do not indicate and imply that the referred device or component must have a specific azimuth or perform construction and operation in the specific azimuth; therefore, it cannot be interpreted as a limitation to the protection scope of the present application. The azimuth words "inner, outer" refer to the inside and outside relative to the outline of each component itself.

To meet the engine compartment space requirements and overall design requirements of the specific engineering machinery (such as the excavator loaders and the skid steer loaders), it is sometimes necessary to reduce a height of a fan to directly mount the fan at a front end of a crankshaft of an engine. At the moments of start, acceleration and deceleration and flameout of the engine, the crankshaft generates a great torque change, while the fan runs later than the engine due to inertia, therefore, a big speed difference is generated between the crankshaft and the fan, resulting in a huge torque change between the fan and the crankshaft and a serious torsional vibration phenomenon. Due to limitations of other belt drive gear trains and engine accessory structures and technical requirements of a cooling system, a connecting shaft of the fan cannot be designed to be too short; however, because the connecting shaft belongs to a cantilever structure, too long connecting shaft will increase the bending moment. Excessive crankshaft torsional vibration and bending moment will lead to breakage and failure of the fan or the connecting structure.

At present, in order to solve the above problems, the coupling or a silicone oil clutch is generally used to connect the crankshaft and the fan so as to reduce an influence of excessive crankshaft torsional vibration. Due to cost limitations and technical requirements of the cooling system, the silicone oil is seldom used, and the coupling is mostly used.

When the coupling is used to connect the engine and the fan, the coupling is mostly connected directly, that is, one end of the coupling is connected to the crankshaft and the other end of the coupling is connected to the fan. An elastic member such as rubber is filled between two ends of the coupling for vibration damping and torsion prevention.

However, in related art, the coupling mostly has an integrated structure and only realizes one-level vibration damping based on the elastic member, so a vibration damping effect needs to be improved; moreover, a positioning reliability between the fan and the crankshaft connected by the coupling is low, which is easy to affect a structural stability and increase a risk of failure.

As can be seen, the performance of the coupling still needs to be improved.

In view of the above situation, the present invention provides a coupling and a mechanical system, so that the performance of the coupling is improved, thereby the performance of the mechanical system being improved.

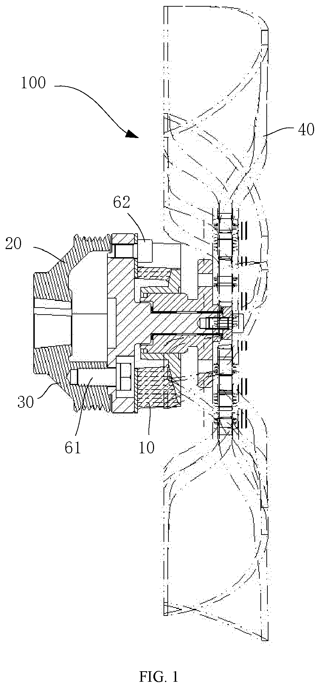

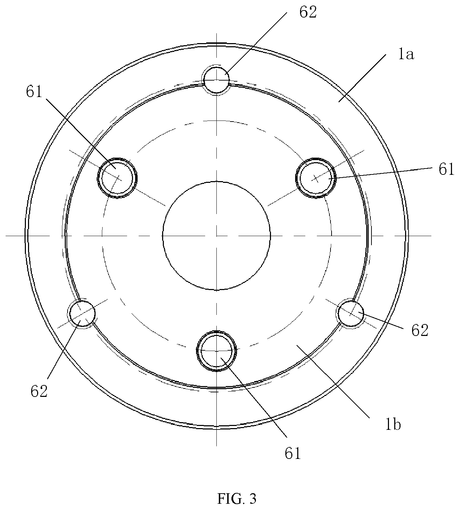

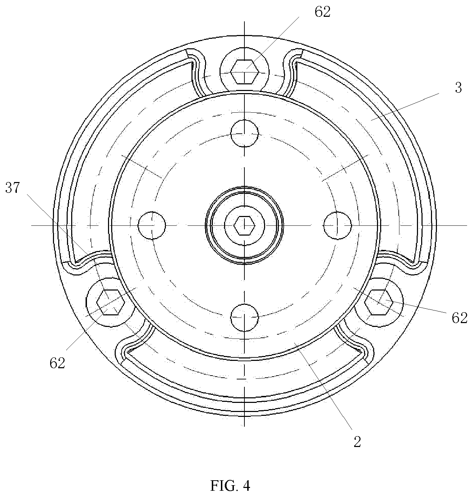

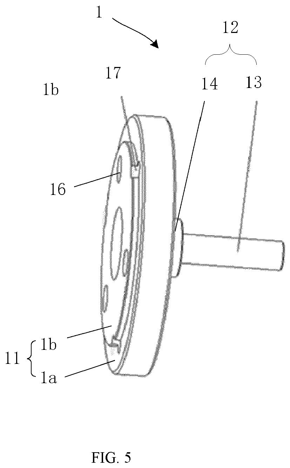

FIG. 1 to FIG. 8 exemplarily show a mechanical system and a coupling of the present invention.

FIG. 1 shows a structure of the mechanical system. Referring to FIG. 1, the mechanical system 100 includes an engine 20, a coupling 10 and a fan 40. The coupling 10 is connected to the engine 20 and the fan 40 to realize driving connection between the engine 20 and the fan 40, so that the engine 20 can drive the fan 40 to rotate for heat dissipation. Specifically, as shown in FIG. 1, when being connected to the engine 20, the coupling 10 is connected to a crankshaft 30 of the engine 20, that is, the coupling 10 realizes the driving connection between the engine 20 and the fan 40 by connecting the crankshaft 30 of the engine 20 with the fan 40.

As an example, the mechanical system 100 is an engineering vehicle such as an excavator loader and a skid digger, or is a part of the engineering vehicle such as a excavator loader and a skid steer loader, as long as the mechanical system 100 includes the engine 20, the coupling 10 and the fan 40.

It can be seen that the coupling 10 is an important part of the mechanical system 100, so the performance of the coupling 10 directly affects the performance of the mechanical system 100.

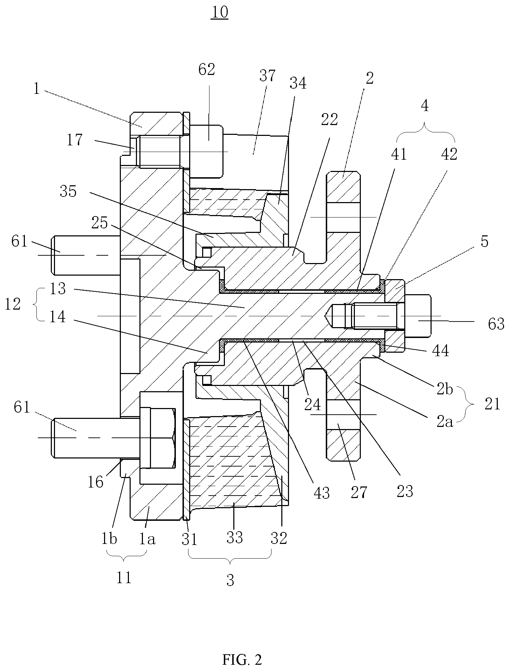

FIG. 2 to FIG. 8 further show the structure of the coupling. Referring to FIG. 2 to FIG. 8 and in conjunction with FIG. 1, the coupling 10 includes a first mounting base 1, a second mounting base 2, a vibration damper 3 and a positioning member 4. The first mounting base 1 includes a first flange 11 and a first shaft 12 which are connected with each other, wherein the first flange 11 is configured to be connected to an engine 20. The second mounting base 2 includes a second shaft 22 and a second flange 21, wherein the second shaft 22 is sleeved outside the first shaft 12, and the second flange 21 is connected to an end, away from the first flange 11, of the second shaft 22, and is configured to be connected to a fan 40. The vibration damper 3 is connected to the first flange 11 and is sleeved outside the second shaft 22 for vibration damping. The positioning member 4 has elasticity and is arranged between the first shaft 12 and the second mounting base 2 for supporting and positioning.

Based on the above arrangement, when the engine 20 starts, accelerates, decelerates or shuts down, the crankshaft 30 generates a large torque change, and the fan 40 runs later than the crankshaft 30 under the action of inertia, resulting in that the second mounting base 2 runs later than the first mounting base 1, the positioning member 4 with elasticity and located between the first mounting base 1 and the second mounting base 2 absorbs a certain torsional vibration impact energy to reduce the relative motion trend between the fan 40 and the crankshaft 30 and reduce the torsional vibration amplitude, and at the same time, the second mounting base 2 transmits the torque change to the vibration damper 3 and the vibration damper 3 further performs vibration damping and torsion resistance, so that the torsional vibration amplitude is further attenuated, and the risk of part failure caused by excessive torsional vibration is reduced. Part failure includes various failure forms, such as failure of the coupling 10, damage of the fan 40, flying off of the fan 40 which cause damages to a radiator core, and breakage and failure of connecting parts between the coupling 10 and the engine 20 as well as the fan 40.

It can be seen that under the comprehensive action of the vibration damper 3 and the positioning member 4, the coupling 10 realizes a two-level vibration damping function, and compared with the situation that only single-level vibration damping function is realized in related art, the vibration damping performance is effectively improved, the torsional vibration transmitted to the fan 40 by the engine 20 (specifically the crankshaft 30) is effectively reduced, the risk of part failure is reduced, thereby a structural stability and a work reliability of the mechanical system 100 being improved.

Meanwhile, the positioning member 4 shares the torsional vibration impact borne by the vibration damper 3, therefore, it is beneficial to relieve the torsional vibration impact borne by the vibration damper 3 and reduce the failure risk of the vibration damper 3, which is beneficial to further improve a structural reliability of the vibration damper 3 and prolong a service life of the vibration damper 3.

Furthermore, in the above arrangement, the positioning member 4 not only plays a role in vibration damping, but also plays a supporting and positioning role, limits the relative motion between the first mounting base 1 and the second mounting base 2 and reduces the relative motion between the first mounting base 1 and the second mounting base 2, which is beneficial to further improve the performances of the coupling 10 and the mechanical system 100.

The relative motion between the first mounting base 1 and the second mounting base 2 mainly refers to a relative motion between the first shaft 12 and the second mounting base 2, specifically including the relative motion between the first shaft 12 and the second mounting base 2 in a radical direction and the relative motion in an axial direction. The "radial direction" and "axial direction" mentioned here and later refer to the radial direction and the axial direction of the first shaft 12 and the second shaft 22, and also refer to the radial direction and the axial direction of the first mounting base 1 and the second mounting base 2, which are consistent with the overall radial direction and axial direction of the coupling 10.

The relative motion between the first shaft 12 and the second mounting base 2 in the radial direction reduces a mounting coaxiality of the first shaft 12 and the second mounting base 2, resulting in poor assembling coaxiality between the fan 40 and the engine 20, and a large dynamic unbalance value, such that the fan 40 is prone to deflection to cause problems of loud noise and part failure.

The relative motion between the first shaft 12 and the second mounting base 2 in the axial direction is prone to causing the mounting base 2 and the fan 40 to move back and forth, thereby increasing the risk of part failure and affecting the normal achievement of the whole system function. For example, when the fan 40 moves back and forth, the connecting parts for connecting the fan 40 and the second mounting base 2 is prone to breakage and failure, thereby affecting the structural stability and work reliability, even possibly resulting in that the coupling 10 fails to effectively perform vibration damping and torsion resistance on the fan 40 to cause failure of vibration damping.

By using the positioning member 4 to support and position the first shaft 12 and the second mounting base 2, the relative motion between the first shaft 12 and the second mounting base 2 in the radial direction and/or axial direction is limited, thereby reducing the deflection and/or movement of the fan 40, reducing the noise and/or the risk of part failure, and improving the performances of the coupling 10 and the mechanical system 100.

It can be seen that based on the above arrangements, it is not only beneficial to improve the vibration damping performance of the coupling 10, but also beneficial to improve the positioning reliability of the coupling 10, reduce noise, and reduce the risk of part failure, so that the performances of the coupling 10 and the mechanical system 100 are effectively improved, the structure is more stable, the work reliability is higher, the failure risk is lower and the service life is longer.

In order to reduce the deflection of structural parts such as the fan 40 and reduce the noise, referring to FIG. 2, in some embodiments, the positioning member 4 includes a first positioning part 41, and the first positioning part 41 performs supporting and positioning in the radial direction. Based on the first positioning part 41, the positioning member 4 has a radial supporting and positioning function, and can limit the relative motion between the first shaft 12 and the second mounting base 2 in the radial direction, improve the assembling coaxiality between the fan 40 and the engine 20, improve the dynamic unbalance performance and reduce the deflection amount of the fan 40, thereby reducing noise.

In order to reduce the axial movement of the structural part such as the fan 40 and the risk of part failure, referring to FIG. 2, in some embodiments, the positioning member 4 includes a second positioning part 42, and the second positioning part 42 performs supporting and positioning in the axial direction. Based on the second positioning part 42, the positioning member 4 has an axial supporting and positioning function and can limit the relative motion between the first shaft 12 and the second mounting base 2 in the axial direction, reduce the axial movement of the fan 40, improve the structural stability and reduce the risk of part failure.

Furthermore, referring to FIG. 2, in some embodiments, the positioning member 4 includes both the first positioning part 41 and the second positioning part 42, and the second positioning part 42 is connected to an end of the first positioning part 41 and protrudes relative to the first positioning part 41 in the radial direction. In this case, the positioning member 4 has both radial positioning function and axial positioning function, and can effectively support and position the first shaft 12 and the second mounting base 2, thereby more effectively realizing vibration damping and noise reduction and preventing failure.

In the embodiments the material of the positioning member 4 is not limited, as long as having elasticity. Exemplarily, the positioning member 4 is made of a wear-resistant elastic material (such as polyurethane and other resin materials). In this case, the positioning member 4 is not only elastic, capable of realizing vibration damping, but also wear-resistant, not easily worn out, and with high structural reliability, therefore, the positioning member 4 performs vibration damping and positioning more effectively and reliably.

In the embodiments the number of the positioning member 4 is not limited, and may be one, two or more, that is, the coupling 10 includes at least one positioning member 4. When the coupling 10 includes at least two positioning members 4, the at least two positioning member 4 may be arranged at intervals in the axial direction so as to perform supporting and positioning at different axial positions and make the whole structure more stable and reliable.

As an example, referring to FIG. 2, the at least one positioning member 4 of the coupling 10 includes a first positioning member 43, and the first positioning member 43 is located between the second shaft 22 and the first shaft 12. As the second shaft 22 is sleeved outside the first shaft 12, that is, the first shaft 12 extends into the second shaft 22, the first positioning member 43 located between the second shaft 22 and the first shaft 12 is actually located in a gap between the second shaft 22 and the first shaft 12, in this case, the first positioning member 43 fills the gap between the first shaft 12 and the second shaft 22, and supports and positions the second shaft 22 and the first shaft 12, so as to limit the relative motion between the first shaft 12 and the second shaft 22 in the radial direction and/or axial direction, thereby improving the coaxiality of the first shaft 12 and the second shaft 22, and/or reducing the axial movement of the first shaft 12 and the second shaft 22.

Specifically, referring to FIG. 2, in some embodiments, the first shaft 12 includes a first shaft section 13 and a second shaft section 14, the first shaft section 13 is connected to the first flange 11 through the second shaft section 14, a diameter of the first shaft section 13 is smaller than a diameter of the second shaft section 14, the first shaft section 13 extends into the second shaft 22, the first positioning member 43 includes a first positioning part 41 and/or a second positioning part 42, the first positioning part 41 of the first positioning member 43 is located between an inner wall of the second shaft 22 and a side surface of the first shaft section 13 to perform supporting and positioning in the radial direction, and the second positioning part 42 of the first positioning member 43 is located between an axial end surface, close to the second flange 21, of the second shaft section 14 and the second shaft 22 to perform supporting and positioning in an axial direction.

The first positioning part 41 of the first positioning member 43 fills a radial gap between the first shaft 12 and the second shaft 22 to plays a role in radial supporting and positioning, such that the radial relative motion between the first shaft 12 and the second shaft 22 is reduced to improve the assembling coaxiality of the fan 40 and the engine 20, and reduce the deflection of the fan 40 as well as the noise.

The second positioning part 42 of the first positioning member 43 fills an axial gap between the first shaft 12 and the second shaft 22 and plays a role in axial supporting and positioning, such that the axial relative motion between the first shaft 12 and the second shaft 22 is reduced to reduce the axial movement of the parts and the risk of part failure.

When the first positioning member 43 includes both the first positioning part 41 and the second positioning part 42, the first positioning member 43 has both radial and axial positioning functions, and not only realizes vibration damping and noise reduction, but also avoids part failure.

Meanwhile, in the above arrangement, the first positioning member 43 is located at one end, close to the first flange 11, of the first shaft 12, therefore, the first positioning member 43 supports and positions the first shaft 12 and the second shaft 22 at one end close to the first flange 11.

As can be seen, in the embodiment, the first positioning member 43 performs radial and/or axial supporting and positioning on the first shaft 12 and the second shaft 22 at one end close to the first flange 11, thereby effectively realizing vibration damping and noise reduction and preventing failure.

The second shaft section 14 may be integrally located outside the second shaft 22, or may be at least partially located in the second shaft 22. As shown in FIG. 2, when the second shaft section 14 is at least partially located in the second shaft 22, an axial end face, close to the second flange 21, of the second shaft section 14 is located in the second shaft 22, and the second positioning part 42 of the first positioning member 43 is correspondingly located in the second shaft 22. In this case, the second shaft section 14 is at least partially located in the second shaft 22, and the second shaft section 14 and the second shaft 22 form an engagement relationship, therefore, it is more beneficial to improve a combination firmness and positioning reliability of the first shaft 12 and the second shaft 22.

In addition, as another example, referring to FIG. 2, the second flange 21 is sleeved outside the first shaft 12, the at least one positioning member 4 of the coupling 10 includes a second positioning member 44, and the second positioning member 44 is located between the second flange 21 and the first shaft 12. As the second flange 21 is sleeved outside the first shaft 12, that is, the first shaft 12 extends into the second flange 21, the second positioning member 44 located between the second flange 21 and the first shaft 12 is actually located in a gap between the second flange 21 and the first shaft 12. In this case, the second positioning member 44 fills the gap between the first shaft 12 and the second flange 21 to support and position the second flange 21 and the first shaft 12 so as to limit the relative motion between the first shaft 12 and the second flange 21 in the radial direction and/or axial direction, thereby improving the coaxiality of the first shaft 12 and the second flange 21, and/or reducing the axial movement of the first shaft 12 and the second flange 21.

Specifically, referring to FIG. 2, in some embodiments, the coupling 10 includes a limiting member 5, the limiting member 5 is arranged on an end part, away from the first flange 11, of the first shaft 12, and limits the first shaft 12, the second positioning member 44 includes a first positioning part 41 and/or a second positioning part 42, the first positioning part 41 of the second positioning member 44 is located between an inner wall of the second flange 21 and a side surface of the first shaft 12 to perform supporting and positioning in the radial direction, and the second positioning part 42 of the second positioning member 44 is located between an end face, facing the first flange 11, of the limiting member 5 and the second flange 21 to perform supporting and positioning in the axial direction.

The first positioning part 41 of the second positioning member 44 fills a radial gap between the first shaft 12 and the second flange 21 to play a role in radial supporting and positioning, such that the radial relative motion between the first shaft 12 and the second flange 21 is reduced, thereby the assembling coaxiality of the fan 40 and the engine 20 being improved, and the deflection of the fan 40 and the noise being reduced.

The second positioning part 42 of the second positioning member 44 fills an axial gap between the limiting member 5 and the second flange 21 to play a role in axial supporting and positioning, such that the axial movement of the part and the risk of part failure are reduced by reducing the axial relative motion between the second flange 21 and the first shaft 12.

When the second positioning member 44 includes both the first positioning part 41 and the second positioning part 42, the second positioning member 44 has both radial and axial positioning functions, so that vibration damping and noise reduction are realized, and part failure is avoided.

At the same time, in the above arrangement, the second positioning member 44 is located at one end, away from the first flange 11, of the first shaft 12, therefore, the first shaft 12 and the second flange 21 can be supported and positioned at one end away from the first flange 11 by the second positioning member 44.

It can be seen that in this example, the second positioning member 44 performs radial and/or axial supporting and positioning on the first shaft 12 and the second flange 21 at one end away from the first flange 11, thereby effectively realizing vibration damping and noise reduction and preventing failure.

Furthermore, as the first shaft 12 is further limited by the limiting member 5, the structural stability is higher, the second mounting base 2 is more reliably prevented from falling off the first shaft 12, thereby more effectively preventing the fan 40 from falling off and improving the system safety and stability.

When the second flange 21 is sleeved outside the first shaft 12, the first shaft 12 may penetrate through or not penetrate through the second flange 21. When the first shaft 12 does not penetrate through the first flange 11, the limiting member 5 is integrally or partially located in the second flange 21, and in this case, the second positioning part 42 of the second positioning member 44 is located in the second flange 21, so that the second positioning member 44 is integrally located in the second flange 21. When the first shaft 12 penetrates through the second flange 21, referring to FIG. 2, the limiting member 5 is located outside the second flange 21, and in this case, the second positioning part 42 of the second positioning member 44 is located outside the second flange 21, and is specifically located between an end face, facing the first flange 11, of the limiting member 5 and an end face, farthest away from the first flange 11, of the second flange 21. When the first shaft 12 penetrates through the second flange 21, the limiting member 5 can realize reliable limitation without being embedded into the second flange 21, thereby facilitating assembling.

As yet another example, referring to FIG. 2, in some embodiments, the coupling 10 includes both a first positioning member 43 and a second positioning member 44. In this way, the first positioning member 43 and the second positioning member 44 performs supporting and positioning as well as vibration damping at two axial ends of the first shaft 12 respectively, therefore, the structural is more stable, and the positioning and vibration damping effects are better.

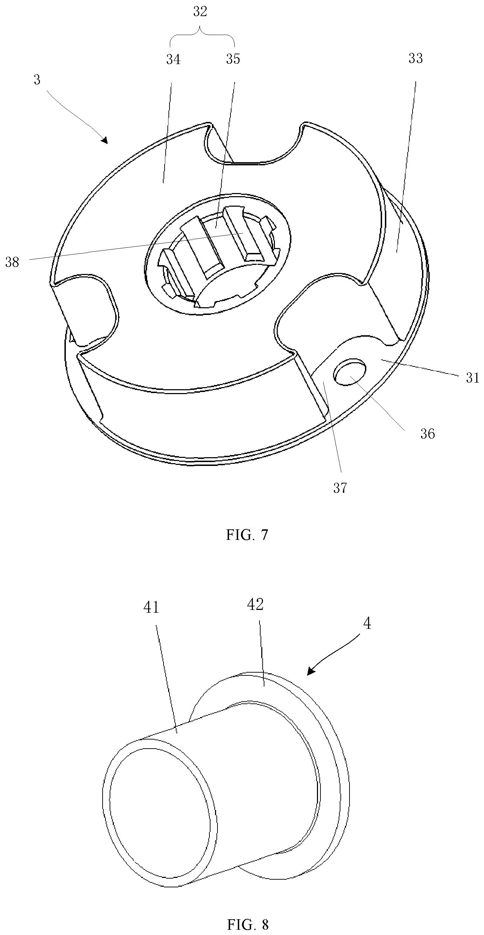

In order to realize the vibration damping function of the vibration damper 3, referring to FIG. 2 and FIG. 7, in some embodiments, the vibration damper 3 includes a first supporting member 31, a second supporting member 32 and an elastic member 33, wherein the first supporting member 31 and the second supporting member 32 are opposite to each other in the axial direction, the elastic member 33 is arranged between the first supporting member 31 and the second supporting member 32, the first supporting member 31 is connected to the first flange 11, and the second supporting member 32 is sleeved outside the second shaft 22. In this case, the vibration damper 3 is connected to the first mounting base 1 and the second mounting base 2 respectively through the first supporting member 31 and the second supporting member 32; meanwhile, the vibration damper 3 realizes the vibration damping function by the elastic member 33 and cooperates with the positioning member 4 to realize the two-level vibration damping function of the coupling 10.

The vibration damper 3 and the second mounting base 2 may be connected in various ways. For example, referring to FIG. 2, in some embodiments, the vibration damper 3 and the second shaft 22 are connected through a key 28 such as a rectangular spline 29. The vibration damper 3 and the second shaft 22 may be connected in a threaded manner and other manners, but when the vibration damper 3 and the second shaft 22 are connected through the key, particularly the rectangular spline, the torque transmission and positioning effects are better, the force transmission is more stable, and under the condition of long-term torsional vibration impact, breakage is not liable to occur, and the failure risk is low.

The embodiment shown in FIG. 1 to FIG. 8 are further described below.

As shown in FIG. 1 to FIG. 8, in the embodiment, the coupling 10 is a combined coupling, including a first mounting base 1, a second mounting base 2, a vibration damper 3, a limiting member 5 and two positioning member 4 which are detachably connected.

The first mounting base 1 is configured to be connected to a crankshaft 30 of an engine 20, so as to realize driving connection between the coupling 10 and the engine 20. As shown in FIG. 1 to FIG. 5, in the embodiment, the first mounting base 1 is of an integrated structure and includes a first flange 11 and a first shaft 12, wherein the first flange 11 and the first shaft 12 are arranged concentrically and are connected sequentially along an axial direction.

The first flange 11 is configured to be connected to the crankshaft 30 to realize connection between the first mounting base 1 and the crankshaft 30, thereby realizing connection between the coupling 10 and the engine 20. As shown in FIG. 1 to FIG. 5, in the embodiment, the first flange 11 is integrally cylindrical and includes a first body 1a and a first boss 1b which are arranged concentrically. The first body 1a is connected to the first shaft 12. The first boss 1b with a diameter less than that of the first body 1a is arranged on an end face, away from the first shaft 12, of the first body 1a, and protrudes from the first body 1a towards a direction away from the first shaft 12. The first boss 1b is configured to be clamped into a spigot of the crankshaft 30 and is fixedly connected by a connecting piece 61 (such as a bolt) to realize detachable connection between the first mounting base 1 and the crankshaft 30. The first boss 1b is provided with a connecting hole 16, and the connecting piece 61 penetrates through the connecting hole 16 to fixedly connect the first boss 1b and the crankshaft 30.

The first flange 12 is configured to be connected to the second mounting base 2 to realize connection between the first mounting base 1 and the second mounting base 2. As shown in FIG. 1 to FIG. 5, in the embodiment, the first shaft 12 is connected to an end face, away from the first boss 1b, of the first body 1a, and protrudes from the first body 1a towards a direction away from the first boss 1b. The first shaft 12 has a diameter less than a diameter of the first body 1a, and includes a first shaft section 13 and a second shaft section 14. The first shaft section 13 and the second shaft section 14 are sequentially connected in a direction from the first shaft 12 to the first flange 11. The second shaft section 14 is connected between the first shaft section 13 and the first body 1a. A diameter of the second shaft section 14 is greater than that of the first shaft section 13, so that the first shaft 12 becomes a stepped shaft. When being assembled with the second mounting base 2, the first shaft section 13 is integrally inserted into the second mounting base 2, and a part of the second shaft section 14 is inserted into the second mounting base 2.

The second mounting base 2 is configured to be connected to a fan 40 to realize driving connection between the coupling 10 and the fan 40, thereby realizing driving connection between the crankshaft 30 and the fan 40. As shown in FIG. 1 to FIG. 4 and FIG. 6, in the embodiment, the second mounting base 2 is of an integrated structure and includes a second flange 21 and a second shaft 22. The second flange 21 and the second shaft 22 are arranged concentrically and are connected sequentially along the axial direction.

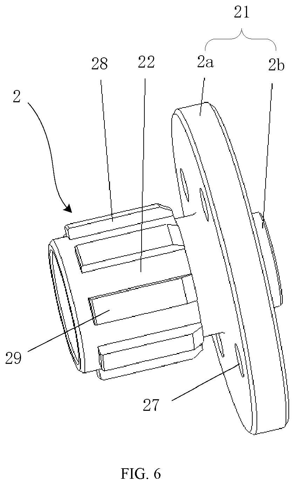

The second flange 21 is configured to be connected to the fan 40 to realize connection between the coupling 10 and the fan 40. As can be seen from FIG. 2 and FIG. 6, in the embodiment, the second flange 21 is integrally cylindrical and includes a second body 2a and a second boss 2b which are arranged concentrically. The second body 2a is connected to the second shaft 22. The second boss 2b with a diameter less than that of the second body 2a is arranged on an end face, away from the second shaft 22, of the second body 2a, and protrudes from the second body 2a towards a direction away from the second shaft 22. The second boss 2b is configured to be clamped into a spigot of the fan 40. Meanwhile, the second body 2a is provided with an assembling hole 27 for a connecting part such as a bolt (not shown in the figure) to pass through so as to connect the second body 2a to the fan 40. Based on the engagement of the second boss 2b and the fan 40 and the fixed connection between the second body 2a and the fan 40 through the connecting part, the second flange 21 is stably connected to the fan 40 so as to improve the connection stability of the coupling 10 and the fan 40.

The second shaft 22 is configured to be connected to the first shaft 12 and the vibration damper 3 to realize successful transmission of a torque. It can be seen from FIG. 2 and FIG. 6 that in the embodiment, the second shaft 22 is connected to an end face, away from the second boss 2b, of the second body 2a, and protrudes from the second body 2a towards a direction away from the second boss 2b. A diameter of the second shaft 22 is less than a diameter of the second body 2a. The second shaft 22 is fitted with the first shaft 12 and is connected to the vibration damper 3 through a key.

It can be seen from FIG. 2 and FIG. 6 that in the embodiment, a through hole 23 is formed at the center of the second mounting base 2. The through hole 23 penetrates through the whole second mounting base 2 along the axial direction. In other words, the through hole 23 penetrates through the second shaft 22 and the second flange 21 along the axial direction. Specifically, as shown in FIG. 2, the through hole 23 includes a first hole section 24 and a second hole section 25. The first hole section 24 and the second hole section 25 sequentially communicate with each other along a direction from the second flange 21 to the first flange 11. The first hole section 24 penetrates through the second boss 2b. One part of the first hole section 24 is located in the second flange 21, and the other part is located in the second shaft 22. The second hole section 25 is arranged at an end, close to the first flange 11, of the first hole section 24, and penetrates through the second shaft 22. The diameters of the first hole section 24 and the second hole section 25 are matched with those of the first shaft section 13 and the second shaft section 14 respectively. In this case, the diameter of the second hole section 25 is greater than that of the first hole section 24, and the through hole 23 is a counterbore.

When the second mounting base 2 and the first mounting base 1 are assembled, the first shaft 12 penetrates through the through hole 23, one part of the second shaft section 14 of the first shaft 12 is located in the second hole section 25, and the first shaft section 13 of the first shaft 12 is inserted into the first hole section 24 and penetrates through one end, away from the second hole section 25, of the first hole section 24. In this case, not only the second shaft 22 is sleeved outside the first shaft 12, but also the second flange 21 is sleeved outside the first shaft 12, so that the second mounting base 2 is integrally sleeved outside the first shaft 12 to realize shaft hole cooperation between the first shaft 12 and the whole second mounting base 2. In this case, one end, away from the first flange 11, of the first shaft 12 is located outside the second mounting base 2, and is specifically located on one side, away from the first flange 11, of the second flange 21. As shown in FIG. 2, in the embodiment, the limiting member 5 is arranged at one end, away from the first flange 11, of the first shaft 12. In the radial direction, a size of the limiting member 5 is greater than a size of the first hole section 24. The limiting member 5 is fastened on an end face, away from the first flange 11, of the first shaft 12 through a fastener 63. In this way, the limiting member 5 limits the relative motion between the first shaft 12 and the second mounting base 2 in the axial direction to prevent the first shaft 12 and the second mounting base 2 from being disengaged.

In order to facilitate the assembling of the first shaft 12 and the second mounting base 2, a gap is inevitably present between the first shaft 12 and the second mounting base 2 which are in shaft hole cooperation. For example, it can be seen from FIG. 2 that in the embodiment, a gap is present between a side surface of the first shaft section 13 and an inner wall of the first hole section 24, and a gap is present between an end face, close to the second flange 21, of the second shaft section 14 and an end face, close to the second flange 21, of the second hole section 25; moreover, a gap is also present between an end face, close to the first flange 11, of the limiting member 5 and an end face, away from the first flange 11, of the second boss 2b (that is, an end face, farthest away from the first flange 11, of the second flange 21). The gap between the side surface of the first shaft section 13 and the inner wall of the first hole section 24 is a radial gap, and the radial gap is located between the side surface of the first shaft 12 and the inner walls of the second shaft 22 and the second flange 21. The gap between the end face, close to the second flange 21, of the second shaft section 14 and the end face, close to the second flange 21, of the second hole section 25, and the gap between the end face, close to the first flange 11, of the limiting member 5 and the end face, away from the first flange 11, of the second boss 2b are both axial gaps, and the two axial gaps are located between the axial end faces of the first shaft 12 and the second shaft 22, and the axial end faces of the limiting member 5 and the second flange 21 respectively.

If the radial and axial gaps between the second mounting shaft 2 and the first shaft 12 as well as the limiting member 5 are not effectively treated, problems may arise. For example, if the radial gap between the first shaft 12 and the second mounting base 2 is not effectively treated, in the working process of the coupling 10, the radial relative motion may occur between the first shaft 12 and the second mounting base 2, which affects the coaxiality between the first shaft 12 and the second mounting base 2, thereby deteriorating the coaxiality among the crankshaft 30, the coupling 10 and the fan 40, increasing the unbalance amount and the deflection amount of the fan 40, intensifying shake and increasing the running noise. If the axial gaps between the second mounting base 2 and the first shaft 12 as well as the limiting member 5 are not effectively treated, in the working process of the coupling 10, the axial relative motion may occur between the first shaft 12 and the second mounting base 2, thereby resulting in the axial movement of the first mounting base 1 and/or the second mounting base 2, affecting the system stability and increasing the failure risk of connecting parts such as the fastener 63.

For the above situations, referring to FIG. 2 in conjunction with FIG. 8, in the embodiment, two positioning members 4 are arranged between the second mounting base 2 and the first shaft 12 to fill the gaps among the second mounting base 2, the first shaft 12 and the limiting member 5 for supporting and positioning.

Specifically, as shown in FIG. 2 and FIG. 8, the two positioning members 4 with the same structure are integrally hollow cylindrical and include a first positioning part 41 and a second positioning part 42. The first positioning part 41 is connected to an axial end of the second positioning part 42. An outer diameter of the second positioning part 42 is greater than an outer diameter of the first positioning part 41, so that the second positioning part 42 protrudes outwards in the radial direction relative to the first positioning part 41.

The two positioning members 4 are arranged at different positions and are located at two axial ends of the first shaft section 13 respectively. The positioning member 4 located at one end, close to the first flange 11, of the first shaft section 13 is a first positioning member 43, and the positioning member 4 located at one end, away from the first flange 11, of the first shaft section 13 is a second positioning member 44. The first positioning part 41 of the first positioning member 43 is located in the second shaft 22, sleeved outside the first shaft section 13 and located between the side surface of the first shaft section 13 and the inner wall of the second shaft 22, and fills the gap between the side surface of the first shaft section 13 and the inner wall of the second shaft 22 to play a role in radial supporting and positioning, thereby reducing eccentricity and improving coaxiality. The second positioning part 42 of the first positioning member 43 is also located int he second shaft 22 and clamped between the axial end faces of the second shaft section 14 and the second hole section 25, and fills the axial gap between the second shaft section 14 and the second hole section 25 to play a role in axial supporting and positioning, thereby reducing axial movement. The first positioning part 41 of the second positioning member 42 is located in the second flange 21, sleeved outside the first shaft section 13 and located between the side surface of the first shaft section 13 and the inner wall of the second flange 21, and fills the gap between the side surface of the first shaft section 13 and the inner wall of the second flange 21 to play a role in radial supporting and positioning, thereby reducing eccentricity and improving coaxiality. The second positioning part 42 of the second positioning member 42 is located outside the second flange 21 and clamped between the axial end faces of the limiting member 5 and the second flange 21 (which is specifically the second boss 2b), and fills the axial gap between the limiting member 5 and the second flange 21 to play a role in axial supporting and positioning, thereby reducing axial movement.

It can be seen that the first positioning member 43 and the second positioning member 44 fill the axial and radial gaps between the second mounting base 2 and the first shaft 12 as well the limiting member 5, and play a role in axial and radial supporting and positioning at two axial ends of the first shaft 12. In this way, on one hand, the coaxiality between the first shaft 12 and the second mounting base 2 is improved so as to improve the coaxiality between the crankshaft 30 and the fan 40, reduce the deflection and shake of the fan and reduce the noise; and on the other hand, the axial movement of parts such as the fan 40 is reduced, thereby improving the structural stability and reducing the risk of part failure.

Furthermore, in the embodiment, the two positioning members 4, namely the first positioning member 43 and the second positioning member 44, are both made of a polyurethane material. Based on this, the two positioning members 4, namely the first positioning member 43 and the second positioning member 44, are wear-resistant and have elasticity. On one hand, the first positioning member 43 and the second positioning member 44 are not easy to wear and have higher reliability and longer service life; and on the other hand, the first positioning member 43 and the second positioning member 44 have elasticity, not only can play a supporting and positioning role, but also can play a role in vibration damping, absorbing one part of torsional vibration impact energy in the axial and radial directions, and forming a two-level vibration damping effect with the vibration damper 3.

The vibration damper 3 is connected to the first mounting base 1 and the second mounting base 2 for vibration damping. It can be seen from FIG. 2 and FIG. 7 that in the embodiment, the vibration damper 3 includes a first supporting member 31, a second supporting member 32 and an elastic member 33.

The first supporting member 31 is configured to be connected to the first flange 11 to realize connection between the vibration damper 3 and the first mounting base 1. Specifically, as shown in FIG. 2 to FIG. 5 and FIG. 7, in the embodiment, the first supporting member 31 is a plate-shaped piece and is ring-shaped for the first shaft 12 to pass through. Meanwhile, the first flange 11 is provided with a first mounting hole 17. Correspondingly, the first supporting member 31 is provided with a second mounting hole 36, and the mounting piece 62 (such as a bolt) passes through the first mounting hole 17 and the second mounting hole 36 to realize detachable connection between the first supporting member 31 and the first flange 11, thereby realizing detachable connection between the vibration damper 3 and the first mounting base 1.

The second supporting member 32 is arranged on the first supporting member 31 and includes a mounting part 34 and a connecting part 35. The mounting part 34 and the first supporting member 31 are arranged at intervals in the axial direction. The mounting part 34 is plate-shaped and cylindrical for the second shaft 22 to be inserted. The connecting part 35 is arranged at the center of the mounting part 34 and extends from the mounting part 34 to the first supporting member 31. The connecting part 35 is hollow column-shaped to be sleeved outside the second shaft 22. An outer diameter of the connecting part 35 is less than an outer diameter of the mounting part 34, that is, the mounting part 34 protrudes towards the radial outer side relative to the connecting part 35. In this way, there is a space between a part, protruding towards the radial outer side relative to the connecting part 35, of the mounting part 34 and the first supporting member 31.

The elastic member 33 which is a rubber piece is made of rubber, and is located in the space between the part, protruding towards the radial outer side relative to the connecting part 35, of the mounting part 34 and the first supporting member 31. Specifically, in the embodiment, the elastic member 33 is vulcanized in the space between the part, protruding towards the radial outer side relative to the connecting part 35, of the mounting part 34 and the first supporting member 31, so that the elastic member 33 is vulcanized between the mounting part 34 and the connecting part 35 to play a role in vibration damping. As shown in FIG. 7, in the embodiment, the elastic member 33 is recessed towards a radial inner side at the position where the second mounting hole 36 is located to form an avoidance groove 37, thereby avoiding the mounting piece 62 for connecting the first supporting member 31 and the first flange 11.

When the vibration damper 3 and the second mounting base 2 are assembled, as shown in FIG. 2, the second shaft 22 is inserted into the second supporting member 32, so that the vibration damper 3 is sleeved outside the second shaft 22. Furthermore, it can be seen from FIG. 2, FIG. 6 and FIG. 7 that in the embodiment, a key groove 38 is formed in an inner wall of the connecting part 35 of the second supporting member 32 of the vibration damper 3. Correspondingly, a key 28 matched with the key groove 38 is arranged on an outer wall of the second shaft 22. The key 28 is a rectangular spline 29. The rectangular spline 29 is embedded into the key groove 38 to realize key connection between the vibration damper 3 and the second shaft 22, thereby transmitting torque and positioning better.

While being assembled with the engine 20 and the fan 40, the first boss 1b on the first mounting base 1 of the coupling 10 is inserted into the spigot of the crankshaft 30 and is fixed by the connecting piece 61 such as a bolt. Meanwhile, the second boss 2b on the second mounting base 2 of the coupling 10 is inserted into the spigot of the fan 40 and is fixed by a connecting part such as a bolt.

At the moments of start, acceleration and deceleration and flameout of the engine 20, the crankshaft 30 generates a larger torque change, and due to inertia, the fan 40 runs later than the crankshaft 30, therefore, the second mounting base 2 runs later than the first mounting base 1. In this case, due to action of the axial and radial friction forces of the positioning member 4, a certain torsional vibration impact energy can be absorbed to reduce the relative motion trend between the first mounting base 1 and the second mounting base 2, thereby reducing a certain torsional vibration amplitude. Meanwhile, the second mounting base 2 transmits the torque change to the vibration damper 3 through the rectangular spline 29 and force transmission is more stable. Due to the shearing action of the elastic member 33 in the vibration damper 3, the torsional vibration amplitude will be greatly attenuated. Therefore, the structure failure and breakage or damage to the fan 40 caused by excessive torsional vibration can be avoided. When the coupling 10 is subjected to impact load in the radial direction, due to the elastic action of the positioning member 4 and the pulling and pressing action of the elastic member 33 of the vibration damper 3, a certain impact energy can be absorbed at the same time, thereby avoiding structure failure and breakage or damage to the fan 40.

In the operation process of the engine 20, the fan 40 always runs at a high speed consistent with the rotating speed of the crankshaft 30, and the rectangular spline 29 on the second mounting base 2 is matched with the key groove 38 on the vibration damper 3 to play a positioning role; moreover, the positioning member 4 arranged between the second mounting base 2 and the first mounting base 1 also play a positioning and supporting role. In this way, the fan 40 is always coaxial with the crankshaft 30, so that the unbalance amount and the deflection amount of the fan 40 are reduced, thereby the noise caused by dynamic unbalance of the fan 40 being reduced.

In addition, the limiting member 5 is provided, and the limiting member 5 prevents the second mounting base 2 from falling off, therefore, even if the elastic member 33 on the vibration damper 3 is torn or the mounting piece 62 is broken, under the action of the limiting member 5, the fan 40 can be prevented from falling off and from breaking a radiator core, thereby the safety and stability of the mechanical system 100 being effectively improved.

It can be seen that the coupling 10 in the embodiment has the following advantages:
(1) Two-level vibration damping effect. The positioning member 4 absorbs a certain torsional vibration impact energy in the axial and radial directions, meanwhile, the shearing and pulling and pressing actions of the elastic member 33 in the vibration damper 3 greatly attenuates the torsional vibration and impact. As the positioning member 4 and the elastic member 33 can act at the same time, the torsional vibration and impact are attenuated better, the life of the system is prolonged, and the connection reliability is improved.
(2) Multiple positioning action. The two positioning members 4 are arranged between the first mounting base 1 and the second mounting base 2 to play the axial and radial positioning role; meanwhile, the vibration damper 3 and the second mounting base 2 are connected through a rectangular spline 29 to also play a positioning role. Due to the simultaneous action of the two positioning members 4 and the rectangular spline 29, on one hand, the coaxiality among the fan 40, the coupling 10 and the crankshaft 30 is better, the fan 40 runs more stably, the dynamic unbalance is effectively improved, and the deflection of the fan and the noise are reduced; and on the other hand, the axial movement among the fan 40, the coupling 10 and the crankshaft 30 is less, the structural stability is improved, and the risk of part failure is reduced.
(3) The rectangular spline 29 is arranged to connect the vibration damper 3 and the second mounting base 2, so that more stable force transmission and more accurate positioning are achieved; and the rectangular spline 29 has higher structural reliability and is not easy to break and fail.
(4) The limiting member 5 is provided, so that the second mounting base 2 is limited in the axial direction. Even if the vibration damper 3 is in failure, the fan 40 will not fall off, so that the life of the system is prolonged and the reliability of the system is improved.

The coupling 10 in the embodiment adopts a combined positioning manner of spigot positioning, spline positioning and positioning member positioning, simple and reliable positioning and high structural stability are achieved; furthermore, the positioning member 4 ad the vibration damper 3 are used to perform two-level vibration damping, therefore, the performance of the coupling 10 is effectively improved.

The coupling 10 in the embodiment is used to connect the engine 20 and the fan 40, so that the mounting height of the fan 40 is reduced, the structural design of the mechanical system 100 such as a construction vehicle is more reasonable, the torsional vibration phenomenon is reduced, and the connection reliability is improved.

The above are only exemplary embodiments of the present invention and are not intended to limit it. Any modifications, equivalent substitutions, improvements and the like should be understood as included in the protection scope of the present invention, taking into consideration that the invention is solely defined by the appended claims.

## Claims

1. A coupling (10), comprising
a first mounting base (1), comprising a first flange (11) and a first shaft (12) which are connected with each other, wherein the first flange (11) is configured to be connected to an engine (20);
a second mounting base (2), comprising a second shaft (22) and a second flange (21), wherein the second shaft (22) is sleeved outside the first shaft (12), and the second flange (21) is connected to an end, away from the first flange (11), of the second shaft (22) and is configured to be connected to a fan (40);
a vibration damper (3), connected to the first flange (11) and sleeved outside the second shaft (22) for vibration damping; and **characterised in that** it further comprises
at least one positioning member (4), the positioning member (4) having elasticity and being arranged between the first shaft (12) and the second mounting base (2) for performing supporting and positioning.

2. The coupling (10) according to claim 1, wherein the positioning member (4) comprises a first positioning part (41), the first positioning part (41) performing supporting and positioning in a radial direction; and/or, the positioning member (4) comprises a second positioning part (42), the second positioning part (42) performing supporting and positioning in an axial direction.

3. The coupling (10) according to claim 2, wherein the positioning member (4) comprises the first positioning part (41) and the second positioning part (42), the second positioning part (42) being connected to an end of the first positioning part (41) and protruding relative to the first positioning part (41) in the radial direction.

4. The coupling (10) according to any one of claims 1-3, comprising at least two positioning members (4), wherein the at least two positioning members (4) are arranged at intervals in an axial direction.

5. The coupling (10) according to any one of claims 1-4, wherein the at least one positioning member (4) comprises:
a first positioning member (43), located between the second shaft (22) and the first shaft (12); and/or,
a second positioning member (44), located between the second flange (21) and the first shaft (12), the second flange (21) being sleeved outside the first shaft (12).

6. The coupling (10) according to claim 5, wherein the first shaft (12) comprises a first shaft section (13) and a second shaft section (14), the first shaft section (13) is connected to the first flange (11) through the second shaft section (14), a diameter of the first shaft section (13) is smaller than a diameter of the second shaft section (14), the first shaft section (13) extending into the second shaft (22), the first positioning member (43) comprises a first positioning part (41) and/or a second positioning part (42), the first positioning part (41) of the first positioning member (43) is located between an inner wall of the second shaft (22) and a side surface of the first shaft section (13) for performing supporting and positioning in a radial direction, and the second positioning part (42) of the first positioning member (43) is located between an axial end face, close to the second flange (21), of the second shaft section (14) and the second shaft (22) for performing supporting and positioning in an axial direction.

7. The coupling (10) according to claim 6, wherein the axial end face, close to the second flange (21), of the second shaft section (14) is located in the second shaft (22).

8. The coupling (10) according to any one of claims 5-7 , comprising a limiting member (5), wherein the limiting member (5) is arranged on an end, away from the first flange (11), of the first shaft (12) to limit the first shaft (12); and the second positioning member (44) comprises a first positioning member (41) and/or a second positioning member (42), the first positioning part (41) of the second positioning member (44) is located between an inner wall of the second flange (21) and a side surface of the first shaft (12) for performing supporting and positioning in a radial direction, and the second positioning part (42) of the second positioning member (44) is located between an end face, facing the first flange (11), of the limiting member (5) and the second flange (21) for performing supporting and positioning in an axial direction.

9. The coupling (10) according to claim 8, wherein the first shaft (12) penetrates through the second flange (21), the limiting member (5) is located outside the second flange (21), and the second positioning part (42) of the second positioning member (44) is located between the end face, facing the first flange (11), of the limiting member (5) and an end face, farthest away from the first flange (11), of the second flange (21).

10. The coupling (10) according to any one of claims 1-9, wherein the positioning member (4) is made of a wear-resistant elastic material.

11. The coupling (10) according to claim 10, wherein the positioning member (4) is made of polyurethane.

12. The coupling (10) according to any one of claims 1-11, wherein the vibration damper (3) comprises a first supporting member (31), a second supporting member (32) and an elastic member (33), the first supporting member (31) and the second supporting member (32) are opposite to each other in an axial direction, the elastic member (33) is arranged between the first supporting member (31) and the second supporting member (32), the first supporting member (31) is connected to the first flange (11), and the second supporting member (32) is sleeved outside the second shaft (22).

13. The coupling (10) according to any one of claims 1-12, wherein the vibration damper (3) and the second shaft (22) are connected through a key (28).

14. The coupling (10) according to claim 13, wherein the key (28) is a rectangular spline (29).

15. A mechanical system (100), comprising an engine (20) and a fan (40), and the coupling (10) according to any one of claims 1-14, wherein the coupling (10) is connected to the engine (20) and the fan (40).

## Patentansprüche

1. Kupplung (10), umfassend
einen ersten Montagesockel (1), der einen ersten Flansch (11) und eine erste Welle (12), die miteinander verbunden sind, umfasst, wobei der erste Flansch (11) ausgestaltet ist, mit einem Motor (20) verbunden zu werden;
einen zweiten Montagesockel (2), der eine zweite Welle (22) und einen zweiten Flansch (21) umfasst, wobei die zweite Welle (22) hülsenartig um die erste Welle (12) herum angeordnet ist und der zweite Flansch (21) mit einem, von dem ersten Flansch (11) entfernten, Ende der zweiten Welle (22) verbunden ist und ausgestaltet ist, mit einem Gebläse (40) verbunden zu werden;
einen Schwingungsdämpfer (3), der zur Schwingungsdämpfung mit dem ersten Flansch (11) verbunden ist und hülsenartig um die zweite Welle (22) herum angeordnet ist, und **dadurch gekennzeichnet, dass** sie ferner Folgendes umfasst
mindestens ein Positionierelement (4), wobei das Positionierelement (4) Elastizität aufweist und zum Ausführen von Abstützung und Positionierung zwischen der ersten Welle (12) und dem zweiten Montagesockel (2) angeordnet ist.

2. Kupplung (10) nach Anspruch 1, wobei das Positionierelement (4) einen ersten Positionierungsteil (41) umfasst, wobei der erste Positionierungsteil (41) Abstützung und Positionierung in einer radialen Richtung ausführt; und/oder das Positionierelement (4) einen zweiten Positionierungsteil (42) umfasst, wobei der zweite Positionierungsteil (42) Abstützung und Positionierung in einer axialen Richtung ausführt.

3. Kupplung (10) nach Anspruch 2, wobei das Positionierelement (4) den ersten Positionierungsteil (41) und den zweiten Positionierungsteil (42) umfasst, wobei der zweite Positionierungsteil (42) mit einem Ende des ersten Positionierungsteils (41) verbunden ist und in Bezug auf den ersten Positionierungsteil (41) in der radialen Richtung vorsteht.

4. Kupplung (10) nach einem beliebigen der Ansprüche 1-3, die mindestens zwei Positionierelemente (4) umfasst, wobei die mindestens zwei Positionierelemente (4) in Abständen in einer axialen Richtung angeordnet sind.

5. Kupplung (10) nach einem beliebigen der Ansprüche 1-4, wobei das mindestens eine Positionierelement (4) Folgendes umfasst:
ein erstes Positionierelement (43), das sich zwischen der zweiten Welle (22) und der ersten Welle (12) befindet; und/oder
ein zweites Positionierelement (44), das sich zwischen dem zweiten Flansch (21) und der ersten Welle (12) befindet, wobei der zweite Flansch (21) hülsenartig um die erste Welle (12) herum angeordnet ist.

6. Kupplung (10) nach Anspruch 5, wobei die erste Welle (12) einen ersten Wellenabschnitt (13) und einen zweiten Wellenabschnitt (14) umfasst, wobei der erste Wellenabschnitt (13) durch den zweiten Wellenabschnitt (14) mit dem ersten Flansch (11) verbunden ist, ein Durchmesser des ersten Wellenabschnitts (13) kleiner als ein Durchmesser des zweiten Wellenabschnitts (14) ist, sich der erste Wellenabschnitt (13) in die zweite Welle (22) erstreckt, das erste Positionierelement (43) einen ersten Positionierungsteil (41) und/oder einen zweiten Positionierungsteil (42) umfasst, sich der erste Positionierungsteil (41) des ersten Positionierelements (43) zum Ausführen von Abstützung und Positionierung in einer radialen Richtung zwischen einer Innenwand der zweiten Welle (22) und einer Seitenfläche des ersten Wellenabschnitts (13) befindet und sich der zweite Positionierungsteil (42) des ersten Positionierelements (43) zum Ausführen von Abstützung und Positionierung in einer axialen Richtung zwischen einer, nahe dem zweiten Flansch (21) gelegenen, axialen Endfläche des zweiten Wellenabschnitts (14) und der zweiten Welle (22) befindet.

7. Kupplung (10) nach Anspruch 6, wobei sich die, nahe dem zweiten Flansch (21) gelegene, axiale Endfläche des zweiten Wellenabschnitts (14) in der zweiten Welle (22) befindet.

8. Kupplung (10) nach einem beliebigen der Ansprüche 5-7, die ein Begrenzungselement (5) umfasst, wobei das Begrenzungselement (5) an einem, von dem ersten Flansch (11) entfernten, Ende der ersten Welle (12) angeordnet ist, um die erste Welle (12) zu begrenzen; und das zweite Positionierelement (44) ein erstes Positionierelement (41) und/oder ein zweites Positionierelement (42) umfasst, wobei sich der erste Positionierungsteil (41) des zweiten Positionierelements (44) zum Ausführen von Abstützung und Positionierung in einer radialen Richtung zwischen einer Innenwand des zweiten Flanschs (21) und einer Seitenfläche der ersten Welle (12) befindet, und sich der zweite Positionierungsteil (42) des zweiten Positionierelements (44) zum Ausführen von Abstützung und Positionierung in einer axialen Richtung zwischen einer, dem ersten Flansch (11) zugewandten, Endfläche des Begrenzungselements (5) und dem zweiten Flansch (21) befindet.

9. Kupplung (10) nach Anspruch 8, wobei die erste Welle (12) den zweiten Flansch (21) durchdringt, sich das Begrenzungselement (5) außerhalb des zweiten Flanschs (21) befindet und sich der zweite Positionierungsteil (42) des zweiten Positionierelements (44) zwischen der, dem ersten Flansch (11) zugewandten, Endfläche des Begrenzungselements (5) und einer, von dem ersten Flansch (11) am weitesten entfernten, Endfläche des zweiten Flanschs (21) befindet.

10. Kupplung (10) nach einem beliebigen der Ansprüche 1-9, wobei das Positionierelement (4) aus einem verschleißfesten elastischen Material hergestellt ist.

11. Kupplung (10) nach Anspruch 10, wobei das Positionierelement (4) aus Polyurethan hergestellt ist.

12. Kupplung (10) nach einem beliebigen der Ansprüche 1-11, wobei der Schwingungsdämpfer (3) ein erstes Stützelement (31), ein zweites Stützelement (32) und ein elastisches Element (33) umfasst, wobei das erste Stützelement (31) und das zweite Stützelement (32) einander in einer axialen Richtung entgegengesetzt sind, das elastische Element (33) zwischen dem ersten Stützelement (31) und dem zweiten Stützelement (32) angeordnet ist, das erste Stützelement (31) mit dem ersten Flansch (11) verbunden ist und das zweite Stützelement (32) hülsenartig um die zweite Welle (22) herum angeordnet ist.

13. Kupplung (10) nach einem beliebigen der Ansprüche 1-12, wobei der Schwingungsdämpfer (3) und die zweite Welle (22) durch eine Passfeder (28) verbunden sind.

14. Kupplung (10) nach Anspruch 13, wobei die Passfeder (28) ein rechteckiger Keil (29) ist.

15. Mechanisches System (100), das einen Motor (20) und ein Gebläse (40) und die Kupplung (10) nach einem beliebigen der Ansprüche 1-14 umfasst, wobei die Kupplung (10) mit dem Motor (20) und dem Gebläse (40) verbunden ist.

## Revendications

1. Couplage (10), comprenant :
une première base de montage (1), comprenant une première bride (11) et un premier arbre (12) reliés l'un à l'autre, dans lequel la première bride (11) est configurée pour être reliée à un moteur (20) ;
une deuxième base de montage (2), comprenant un deuxième arbre (22) et une deuxième bride (21), dans lequel le deuxième arbre (22) est emmanché à l'extérieur du premier arbre (12), et la deuxième bride (21) est reliée à une extrémité du deuxième arbre (22), éloignée de la première bride (11), et configurée pour être reliée à un ventilateur (40) ;
un amortisseur de vibrations (3), relié à la première bride (11) et emmanché à l'extérieur du deuxième arbre (22) pour l'amortissement de vibrations ; et **caractérisé en ce qu'**il comprend en outre
au moins un élément de positionnement (4), l'élément de positionnement (4) présentant une élasticité et étant agencé entre le premier arbre (12) et la deuxième base de montage (2) pour assurer le support et le positionnement.

2. Couplage (10) selon la revendication 1, dans lequel l'élément de positionnement (4) comprend une première partie de positionnement (41), la première partie de positionnement (41) assurant le support et le positionnement dans une direction radiale ; et/ou, l'élément de positionnement (4) comprend une deuxième partie de positionnement (42), la deuxième partie de positionnement (42) assurant le support et le positionnement dans une direction axiale.

3. Couplage (10) selon la revendication 2, dans lequel l'élément de positionnement (4) comprend la première partie de positionnement (41) et la deuxième partie de positionnement (42), la deuxième partie de positionnement (42) étant reliée à une extrémité de la première partie de positionnement (41) et faisant saillie par rapport à la première partie de positionnement (41) dans la direction radiale.

4. Couplage (10) selon l'une quelconque des revendications 1 à 3, comprenant au moins deux éléments de positionnement (4), dans lequel les au moins deux éléments de positionnement (4) sont agencés à des intervalles dans une direction axiale.

5. Couplage (10) selon l'une quelconque des revendications 1 à 4, dans lequel l'au moins un élément de positionnement (4) comprend :
un premier élément de positionnement (43) situé entre le deuxième arbre (22) et le premier arbre (12) ; et/ou
un deuxième élément de positionnement (44) situé entre la deuxième bride (21) et le premier arbre (12), la deuxième bride (21) étant emmanchée à l'extérieur du premier arbre (12).

6. Couplage (10) selon la revendication 5, dans lequel le premier arbre (12) comprend une première section d'arbre (13) et une deuxième section d'arbre (14), la première section d'arbre (13) est reliée à la première bride (11) par le biais de la deuxième section d'arbre (14), un diamètre de la première section d'arbre (13) est inférieur à un diamètre de la deuxième section d'arbre (14), la première section d'arbre (13) s'étendant dans le deuxième arbre (22), le premier élément de positionnement (43) comprend une première partie de positionnement (41) et/ou une deuxième partie de positionnement (42), la première partie de positionnement (41) du premier élément de positionnement (43) se situe entre une paroi intérieure du deuxième arbre (22) et une surface latérale de la première section d'arbre (13) pour assurer le support et le positionnement dans une direction radiale, et la deuxième partie de positionnement (42) du premier élément de positionnement (43) se situe entre une face d'extrémité axiale de la deuxième section d'arbre (14), proche de la deuxième bride (21), et le deuxième arbre (22) pour assurer le support et le positionnement dans une direction axiale.

7. Couplage (10) selon la revendication 6, dans lequel la face d'extrémité axiale de la deuxième section d'arbre (14), proche de la deuxième bride (21), se situe dans le deuxième arbre (22).

8. Couplage (10) selon l'une quelconque des revendications 5 à 7, comprenant un élément de limitation (5), dans lequel l'élément de limitation (5) est agencé à une extrémité du premier arbre (12), éloignée de la première bride (11), pour limiter le premier arbre (12) ; et le deuxième élément de positionnement (44) comprend un premier élément de positionnement (41) et/ou un deuxième élément de positionnement (42), la première partie de positionnement (41) du deuxième élément de positionnement (44) se situe entre une paroi intérieure de la deuxième bride (21) et une surface latérale du premier arbre (12) pour assurer le support et le positionnement dans une direction radiale, et la deuxième partie de positionnement (42) du deuxième élément de positionnement (44) se situe entre une face d'extrémité de l'élément de limitation (5), tournée vers la première bride (11), et la deuxième bride (21) pour assurer le support et le positionnement dans une direction axiale.

9. Couplage (10) selon la revendication 8, dans lequel le premier arbre (12) pénètre à travers la deuxième bride (21), l'élément de limitation (5) se situe à l'extérieur de la deuxième bride (21), et la deuxième partie de positionnement (42) du deuxième élément de positionnement (44) se situe entre la face d'extrémité de l'élément de limitation (5), tournée vers la première bride (11), et une face d'extrémité de la deuxième bride (21), la plus éloignée de la première bride (11).

10. Couplage (10) selon l'une quelconque des revendications 1 à 9, dans lequel l'élément de positionnement (4) est constitué d'une matière élastique résistante à l'usure.

11. Couplage (10) selon la revendication 10, dans lequel l'élément de positionnement (4) est constitué de polyuréthane.

12. Couplage (10) selon l'une quelconque des revendications 1 à 11, dans lequel l'amortisseur de vibrations (3) comprend un premier élément de support (31), un deuxième élément de support (32) et un élément élastique (33), le premier élément de support (31) et le deuxième élément de support (32) sont opposés l'un à l'autre dans une direction axiale, l'élément élastique (33) est agencé entre le premier élément de support (31) et le deuxième élément de support (32), le premier élément de support (31) est relié à la première bride (11), et le deuxième élément de support (32) est emmanché à l'extérieur du deuxième arbre (22).

13. Couplage (10) selon l'une quelconque des revendications 1 à 12, dans lequel l'amortisseur de vibrations (3) et le deuxième arbre (22) sont reliés par une clavette (28).

14. Couplage (10) selon la revendication 13, dans lequel la clavette (28) est une languette rectangulaire (29).

15. Système mécanique (100), comprenant un moteur (20) et un ventilateur (40), et le couplage (10) selon l'une quelconque des revendications 1 à 14, dans lequel le couplage (10) est relié au moteur (20) et au ventilateur (40).
